Europäisches Patentamt

European Patent Office

Office européen des brevets

(11) Publication number: **0 286 165**
**A1**

## (12) EUROPEAN PATENT APPLICATION

(21) Application number: 88200575.4

(22) Date of filing: 25.03.88

(51) Int. Cl.4: **B23K 26/02** , **G02B 6/26** , **G02B 6/42**

(30) Priority: 26.03.87 NL 8700716

(43) Date of publication of application:
**12.10.88 Bulletin 88/41**

(84) Designated Contracting States:
**AT BE CH DE FR GB IT LI LU NL SE**

(71) Applicant: **ADVANCED PRODUCTION AUTOMATION B.V.**
**Industrieweg 6**
**NL-5504 PJ Veldhoven(NL)**

(72) Inventor: **Goethals, Walther Albert Elisabeth**
**Ganzestaartsedijk 4**
**NL-5525 KC Duizel(NL)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) Apparatus for guiding laser energy into fibres.

(57) The present invention concerns an apparatus for guiding a beam of laser light into one or more optical fibres. In case the beam of laser light is guided into a single optical fibre a system of lenses and a single coupling lense is used, wherein the waist of the beam emerging from the source of laser light is depicted onto the entrance surface of the optical fibre. This causes the diameter of the laser beam at the entrance surface of the fibre to be constant, despite possible changes of divergence of the laser beam. According to a second embodiment the laser beam is alternately guided into a number of fibres. Hereto a rotatable mirror is located behind the system of lenses. Each fibre comprises a single coupling lens. The optical properties of the system of lenses and of the coupling lenses is such that the waist of the laser beam is again depicted onto the entrance surface of the optical fibre. Consequently inaccuracies of the angular mirror position are compensated by the optical system and the coupling lenses.

FIG. 4

## APPARATUS FOR GUIDING LASER ENERGY INTO FIBRES

The present invention relates to an apparatus for guiding a beam of laser light into at least one optical fibre, comprising a lense system.

Such apparatuses are generally known.

Often those apparatuses are used in machines, in which laser light is being applied for the execution of processes, as for instance the burning in of name plates, torch cutting and welding of plastics or metals.

Often pieces which are difficult to move have to be processed in such machines, making it better to displace the laser source. This is not easy either as a laser source, suitable for the generation of power and necessary for the execution of the processes, is rather bulky and sensitive to moving. Hence it is preferred to fix the source of laser light at a location and to guide the laser to the location of the processing by means of guiding means.

Of course mirrors can be used therefor, but this results in substantial accuracy problems of the positioning. This can be avoided by the use of optical fibres.

In known apparatuses for guiding a laser beam into a fibre the danger exists that as a consequence of variations of the divergency of the laser beam the size of the laser beam on the entrance surface of the fibre is not constant. Consequently the energy transmission of the laser source to the fibres is not continuously optimal.

The aim of the present invention is to provide means for guiding the laser into the optical fibre with the highest possible efficiency.

To achieve this a system of lenses has been provided between the source of laser light and the coupling optics, having such optical properties that the waist of the beam emerging from the source of laser light is depicted on the entrance surface of the optical fibre.

These means keep the diameter of the laser beam at the location of the entrance surface of the optical fibre equal at all times, so that the laser beam is transferred with an optimal efficiency.

Often it is necessary that in such a machine processes have to be executed on different locations. Consequently it is useful to distribute the laser light emanating from one laser source over several optical fibres, so that the laser light can be used on several locations.

Thereto the present invention also comprises an apparatus for leading a beam of laser light alternatingly into at least two optical fibres, characterized in that for each of the optical fibres coupling optics has been provided and that in the path between the system of lenses and the coupling lens at least one movable mirror has been provided, which is movable such as to reflect the laser beam alternately to the entrance surfaces of the optical fibres.

As the combination of the system of lenses and each of the coupling optics has such optical properties that the waist of the laser beam emanating from the laser source is depicted on the movable mirrors and eventually on the entrance surface of the fibre, the depiction of the - constant - waist of the laser beam emanating from the laser source is independent of the angular position of the rotatable mirror, so that the laser beam is being projected exactly in the centre of the entrance surface, so that also in this situation the transmission of the laser beam is executed with the greatest efficiency.

Subsequently the invention will be illucidated with the help of the accompanying drawings, in which:

fig. 1 is a schematic view of a first embodiment of the present invention;

fig. 2 is a schematic view of a detail of the embodiments shown in fig. 1;

fig. 3 is a schematic view of a second embodiment of the present invention;

fig. 4 is a schematic perspective view of a third embodiment of the present invention.

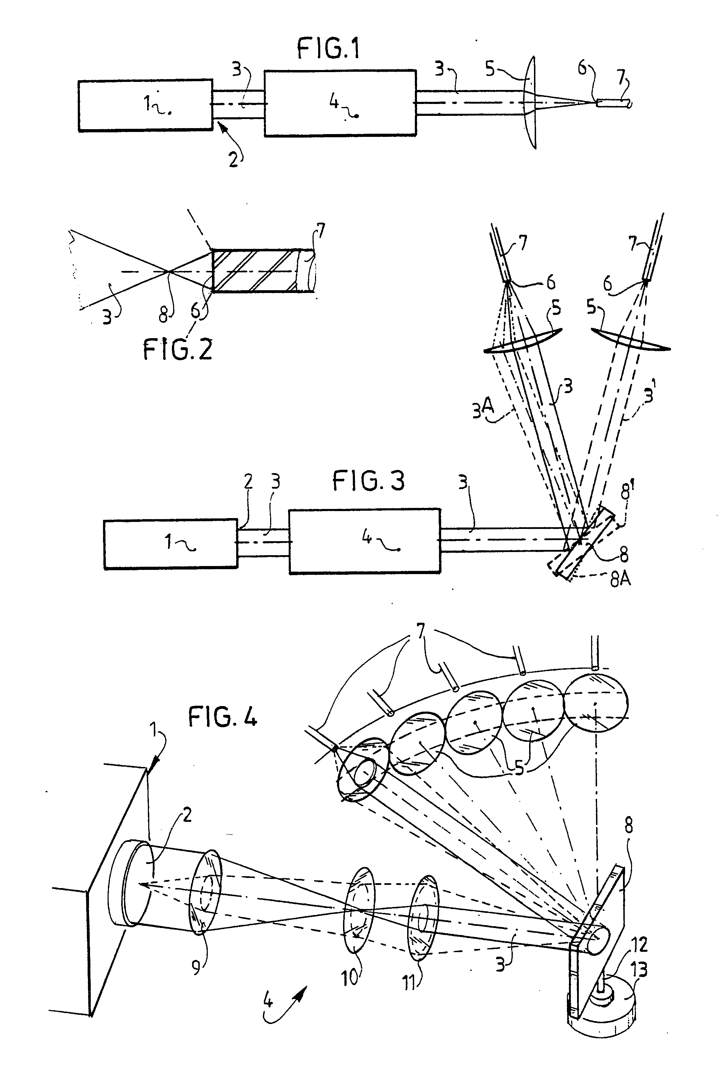

The embodiment shown in fig. 1 comprises a source 1 of laser light comprising on one side a emanation-aperture 2, through which the laser light generated by the laser source 1 emanates in a beam 3. This beam 3 diverges to a slight ex tend, in which the rate of divergency is susceptible to a slight variation. This beam 3 traverses a system of lenses 4 depicted as a block. The laser light beam then leaves the system of lenses 4 at the other side and traverses a coupling lens 5, which makes the laser light beam converge, so that its diameter is adapted to the diameter of the entrance surface 6 at the location of the entrance surface 6 of the fibre 7. In this embodiment the coupling optics take the shape of one single lens. The coupling optics can however also consist of several lenses.

In fig. 2 it is shown in detail how the laser beam 3 converges to a waist 8 and subsequently diverges until the entrance surface 6. As a result of the optical properties of the system of lenses 4 in combination with the coupling lens 5 the diameter of the laser beam at the location of the entrance surface 6 of the optical fibre 7 is made independent of the rate of divergency of the beam 3 emanating from the emanating aperture 2 of the laser source 1, so that the constant waist of the beam is being depicted onto the entrance surface.

In the embodiment of the present invention shown in fig. 3 two optical fibres 7 are shown, each comprising a coupling lens 5. Between the respective coupling lenses 5 and the system of lenses 4 a rotatable mirror 8 is shown, of which the axis of rotation is perpendicular to the plane, extending through the optical axis of the system of lenses 4 and the centres of the coupling planes. The mirror 8 is moved step-wise such that the beam 3 is alternately being reflected to both fibres 7, so that the energy of the light from the laser source 1 is being distributed over both optical fibres 7.

Here too the optical properties of the system of lenses 4 in combination with each of the coupling lenses 5 provide in that the diameter of the laser beam remainsconstant at the location of the entrance surface 6 in case of deviations of the divergency of the laser beam 3 emanating from the laser source 1.

Further this embodiment has the advantage that in the case of deviations of the angular position of the mirror 8, which will often occur as a consequence of mechanic dynamic problems, the position of the laser beam at the location of the entrance surface 6 will not change. This has the advantage, that the mechanical requirements for the accuracy of the angular position of the mirror 8 are less high.

For illustration purposes a path of beams has been drawn of a laser beam 3A in a deviating angular position of the mirror 8A.

Fig. 4 shows a third embodiment of the present invention, in which the laser source, the lenses, the mirror and the optical fibres have been depicted perspective-schematically. The laser source 1 has only been depicted schematically in this drawing, as laser sources are known per se and are not the subject of the present invention. However, the system of lenses 4 has been depicted. This system of lenses 4 comprises three separate lenses 9, 10 and 11. The laser beam 3 is, after traversing the lenses 9, 10 and 11 reflected by a mirror 8, which has been provided on a shaft 12, driven by a stepping motor 13 depicted only partially. The reflected laser beam then traverses one of the coupling lenses 5, each of which have been provided at equal distances from the shaft 12. Behind the coupling lenses 5, five optical fibres 7 have been provided at equal distances as well. The mirror 8 is being driven step-wise by a stepping motor 13, so that the laser beam 3 hits alternately each of the lenses 5 and the coupling plane 6 of the relevant optical fibre 7 located there behind. Thus the light energy generated by the laser source 1 is being distributed over each of the five optical fibres. In order to make the movements of the mirror 8 as small as possible, the lenses 5 have been provided as close together as possible, so that they are adjacent. As a result of the measures according to the present invention the laser beam will hit the entrance surface of the fibre, also when the laser beam hits the coupling lens or optics outside the centre thereof. Hence the angular position of the mirror 8 is considerably less critical than previously, so that a higher coupling efficiency is obtained.

## Claims

1. Apparatus for guiding a beam of laser light into at least one optical fibre, comprising coupling optics, characterized in that a system of lenses has been provided between the source of laser light and the coupling optics, having such optical properties that the waist of the beam emerging from the source of laser light is depicted on the entrance surface of the optical fibre.

2. Apparatus according to claim 1 for guiding a beam of laser light alternatingly into at least two optical fibres, characterized in that for each of the optical fibres coupling optics has been provided and that in the path between the system of lenses and the coupling optics at least one movable mirror has been provided, which is movable such as to reflect the laser beam alternately to the entrance surfaces of the optical fibres.

3. Apparatus according to claim 2, characterized in that the system of lenses has such optical properties that the waist from the laser beam emerging from the source of laser light is being depicted onto the mirror.

4. Apparatus according to claim 2 or 3, characterized in that the system of lenses has such properties that an image of the mirror is depicted onto the entrance surface.

5. Apparatus according to claim 2, 3 or 4, characterized in that in the path between the laser source and the coupling optics at least two movable mirrors have been provided, which are movable such that the laser beam is reflected alternately to the entrance surfaces of the optical fibres, and that in the path in front of each of the mirrors a system of lenses has been provided having such properties that the waist of the laser beam emerging from the laser source is being depicted onto the relevant mirror.

6. Apparatus according to one of the claims 2-5, characterized in that means have been provided for making the mirror rotate step-wise.

7. Apparatus according to one of the preceding claims, characterized in that the system of lenses comprises three lenses.

8. Apparatus according to one of the preceding claims, characterized in that the coupling optics each comprise a single lens.

FIG.1

FIG.2

FIG.3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-3 112 167 (LICENTIA PATENT-VERWALTUNGS) * Claims 7-11,13-15; page 10, line 13 - page 11, line 21; figures 2,3 * | 1,7 | B 23 K 26/02 G 02 B 6/26 G 02 B 6/42 |
| A | --- | 3,8 | |
| X | IEEE JOURNAL OF LIGHTWAVE TECHNOLOGY, vol. LT-3, no. 4, August 1985, pages 739-745, IEEE, New York, US; K. KAWANO et al.: "A new confocal combination lens method for a laser-diode module using a single-mode fiber" * Page 1, column 1 - page 2, column 1; figures 1,2 * --- | 1 | |
| Y | TECHNISCHE RUNDSCHAU, vol. 78, no. 22, May 1986, pages 62-65, Berne, CH; P.K. AFFOLTER et al.: "Feinschweissen und Schneiden mit Festkörperlaser, Lichleiter und Roboter" * Pages 62-65; figure 4 * --- | 2,4-6 | TECHNICAL FIELDS SEARCHED (Int. Cl.4) |
| Y | PATENT ABSTRACTS OF JAPAN, vol. 10, no. 26 (P-425)[2083], 31st January 1986, page 58 P 425; & JP-A-60 177 315 (TOSHIBA K.K.) 11-09-1985 * Abstract * ----- | 2,4-6 | B 23 K G 02 B |

The present search report has been drawn up for all claims

| Place of search | Date of completion of the search | Examiner |
|---|---|---|
| THE HAGUE | 11-07-1988 | ARAN D.D. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)